# FASCICULE DE BREVET EUROPEEN

(11) **EP 3 870 828 B1**
(45) Date de publication et mention de la délivrance du brevet: **21.02.2024**
(21) Numéro de dépôt: 19786380.6
(22) Date de dépôt: 10.09.2019
(51) Int. Cl.: F02N 11/08, F02D 29/02, F02D 41/04

(54) **PROCÉDÉ DE GESTION D'UN ARRÊT AUTOMATIQUE DU MOTEUR THERMIQUE EN FONCTION D'UNE ACTIVITÉ SUR UNE PÉDALE DE FREIN**
VERFAHREN ZUR STEUERUNG EINES AUTOMATISCHEN STOPPS EINES VERBRENNUNGSMOTORS ALS FUNKTION EINER AKTIVITÄT AUF EINEM BREMSPEDAL
METHOD FOR MANAGING AN AUTOMATIC STOP OF A COMBUSTION ENGINE AS A FUNCTION OF AN ACTIVITY ON A BRAKE PEDAL

(30) Priorité: 24.10.2018 FR 1871294
(43) Date de publication de la demande: 01.09.2021
(73) Titulaire: Stellantis Auto SAS, 78300 Poissy (FR)
(72) Inventeur: CLAVIER, Alain, 95250 Beauchamp (FR)
(86) Numéro de dépôt international: PCT/FR2019/052089
(87) Numéro de publication internationale: WO 2020/084206

(56) Documents cités:
- EP-A1- 2 799 693
- EP-A1- 3 333 409
- EP-A2- 1 227 230
- WO-A1-2004/083627
- US-A1- 2017 320 497

## Description

La présente invention porte sur un procédé de gestion d'un arrêt automatique du moteur thermique en fonction d'une activité sur une pédale de frein. L'invention trouve une application avec les véhicules automobiles équipés d'un système d'arrêt et de redémarrage automatique du moteur thermique (système dit "Stop and Start" an anglais) et d'une boîte de vitesses automatique.

Dans ce type de véhicules, les arrêts et les redémarrages automatiques du moteur thermique sont généralement conditionnés par des seuils de pression du système de freinage qui sont calculés à chaque instant en fonction notamment de la vitesse du véhicule et de la déclivité de la route. L'arrêt automatique du moteur thermique est ainsi autorisé lorsque la pression sur la pédale de frein dépasse un seuil correspondant.

Une telle stratégie ne permet toutefois pas d'être représentative de la volonté du conducteur. En effet, à l'approche d'un cédez-le-passage ou d'un dos d'âne par exemple, le conducteur pourra avoir tendance à appuyer fortement sur la pédale de frein ce qui va engendrer un arrêt automatique du moteur thermique, alors que cet arrêt n'est pas souhaitable si une nouvelle accélération se produit juste après la fin du ralentissement. Dans ce cas, la volonté du conducteur est donc mal interprétée par le calculateur moteur.

On connait encore du document EP2799693A1 un procédé de gestion d'un arrêt automatique de moteur thermique.

L'invention vise à remédier efficacement à cet inconvénient en proposant un procédé de gestion d'un arrêt automatique de moteur thermique appartenant à une chaîne de traction de véhicule automobile comportant en outre une boîte de vitesses automatique et un système de démarrage et d'arrêt automatique du moteur thermique, dans lequel :
- suite à une détection d'une phase de freinage, notamment par la détection d'un appui sur une pédale de frein modifiant une pression dans un circuit de freinage, ledit procédé comporte une phase initiale d'attente dans laquelle une vitesse du véhicule automobile est comparée avec un seuil de vitesse haut et un seuil de vitesse bas distincts, et
- dans le cas où la vitesse du véhicule automobile est supérieure ou égale au seuil de vitesse haut, ledit procédé entre dans une phase de surveillance d'une activité sur la pédale de frein et si cette activité est stable sur une durée seuil, ladite activité étant considérée comme stable si un signal de la pression dans le circuit de freinage est compris entre un gabarit inférieur et un gabarit supérieur pendant la durée seuil, un arrêt automatique du moteur thermique est autorisé, ou
- dans le cas où la vitesse du véhicule automobile est inférieure ou égale au seuil de vitesse bas, ledit procédé entre dans une phase de surveillance d'une surpression sur la pédale de frein et si une surpression sur la pédale est détectée, ladite surpression étant détectée lorsque la pression dans le circuit de freinage devient supérieure à un seuil, ledit seuil étant égal à une valeur de la pression dans le circuit de freinage au moment où la vitesse du véhicule automobile devient inférieure ou égale au seuil de vitesse bas augmentée d'une valeur de décalage, un arrêt automatique du moteur thermique est autorisé,
- dans le cas où l'on se trouve dans la phase de surveillance d'une activité sur la pédale de frein et que la vitesse du véhicule automobile devient inférieure ou égale au seuil de vitesse bas sans qu'aucune activité stable sur la pédale de frein n'ait été détectée, alors le procédé comporte l'étape de passer dans la phase de surveillance d'une surpression sur la pédale de frein.

L'invention permet ainsi d'améliorer l'agrément de conduite d'une chaîne de traction équipée d'un système de démarrage et d'arrêt automatique du moteur thermique ainsi que d'une transmission automatisée en permettant au conducteur de contrôler l'arrêt automatique du moteur thermique en fonction de son action sur la pédale de frein qui dépend de différentes situations de vie du véhicule. L'invention permet en outre de mieux maîtriser la consommation du véhicule en diminuant le nombre d'arrêts non souhaités du moteur thermique.

Selon une mise en oeuvre, le gabarit inférieur et le gabarit supérieur sont élaborés à partir d'un signal filtré de la pression dans le circuit de freinage auquel est respectivement soustrait et ajouté une valeur de décalage.

Selon une mise en oeuvre, l'activité sur la pédale de frein est considérée comme stable si également un gradient de pression dans le circuit de freinage est inférieur à un premier seuil et supérieur à un deuxième seuil.

Selon une mise en oeuvre, au cours de la phase de freinage, ledit procédé comporte une étape de surveillance d'une pression dans le circuit de freinage et dans le cas d'une détection d'un freinage sportif et/ou d'une situation de freinage d'urgence, alors l'arrêt automatique du moteur thermique est inhibé.

Selon une mise en oeuvre, le freinage sportif et/ou la situation de freinage d'urgence est détectée lorsqu'une pression dans le circuit de freinage dépasse un seuil de pression maximal en fonction de la vitesse du véhicule pendant une durée seuil.

Selon une mise en oeuvre, dans le cas où l'on se trouve dans la phase de surveillance d'une surpression sur la pédale de frein et que la vitesse du véhicule automobile devient supérieure au seuil de vitesse bas sans qu'aucune surpression sur la pédale de frein n'ait été détectée, alors le procédé comporte l'étape de repasser dans la phase initiale d'attente.

L'invention a également pour objet un calculateur moteur caractérisé en ce qu'il comporte une mémoire programme stockant des instructions logicielles pour la mise en oeuvre du procédé de gestion d'un arrêt automatique du moteur thermique tel que précédemment défini.
[Fig 1] est une représentation schématique d'un exemple de chaîne de traction mettant en oeuvre le procédé selon l'invention de gestion d'un arrêt automatique du moteur thermique en fonction d'une activité sur une pédale de frein;
[Fig 2] est un diagramme des différentes étapes du procédé selon l'invention de gestion d'un arrêt automatique du moteur thermique en fonction d'une activité sur une pédale de frein;
[Fig 3] montre des signaux observables lors de la phase de surveillance d'une activité sur la pédale de frein mise en oeuvre dans le procédé selon l'invention;
[Fig 4] montre des signaux observables lors de la phase de surveillance d'une surpression sur la pédale de frein mise en oeuvre dans le procédé selon l'invention.

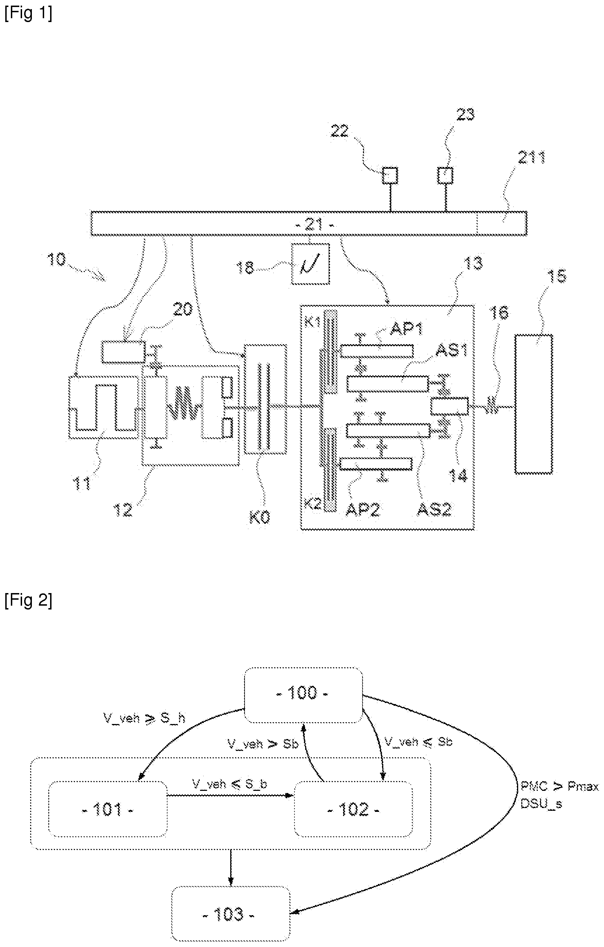

La figure 1 montre une chaîne de traction 10 pour véhicule automobile comportant un moteur thermique 11 associé, le cas échéant, à un dispositif de filtrage des acyclismes, ainsi qu'une boîte de vitesses 13 de type automatique. Un embrayage K0 est monté d'une part entre le dispositif de filtrage des acyclismes 12 du moteur thermique 11 et d'autre part la boîte de vitesses 13. Une sortie de la boîte de vitesses 13 est reliée à un différentiel 14, lequel est relié aux roues 15 par l'intermédiaire de transmissions transversales 16. Le système de freinage du véhicule est commandé par le conducteur par l'intermédiaire d'une pédale de frein 18.

Un organe de démarrage 20 appartient à un système d'arrêt et de redémarrage automatique du moteur thermique 11, notamment en fonction des conditions de circulation (système dit "STT" pour "Stop and Start" en anglais). Ce système comporte à cet effet un module de pilotage du moteur thermique intégré dans le calculateur moteur 21 qui envoie les consignes d'arrêt et de redémarrage automatique du moteur thermique à l'organe de démarrage 20.

Suivant un exemple de réalisation particulier, le moteur thermique 11 est un moteur turbocompressé à trois cylindres de type essence, car cela correspond à une configuration optimale en termes de rendement, de performances, de consommation, et d'émissions réduites de particules polluantes. En variante, le moteur thermique 11 pourra toutefois être un moteur atmosphérique, ou un moteur de type diesel. Le nombre de cylindres peut être différent de trois, en valant notamment deux ou quatre ou plus. Cela dépend de l'application et en particulier de la puissance du véhicule recherchée.

La boîte de vitesses 13 est une boîte de vitesses automatique. Par "automatique", on entend une boîte de vitesses 13 dont les changements de rapport sont pilotés sans action de la part du conducteur et sans rupture de couple lors des changements de rapports. La boîte de vitesses 13 est avantageusement une boîte du type double embrayage (ou "DCT" pour "Dual Clutch Transmission" en anglais). Une telle boîte de vitesses 13 présente un meilleur rendement que les boîtes de vitesses automatiques conventionnelles pour une prestation en dynamique longitudinale et en agrément de conduite très proche.

Cette boîte de vitesses 13 comporte de façon connue en soi un premier embrayage K1 associé à un premier couple d'arbre primaire AP1 et secondaire AS1 portant les rapports pairs et un deuxième embrayage K2 associé à un deuxième couple d'arbre primaire AP2 et secondaire AS2 portant les rapports impairs de la boîte de vitesses. En variante, la boîte de vitesses 13 pourra être une boîte à trains épicycloïdaux ou toute autre boîte de vitesses adaptée à l'application.

L'organe de démarrage 20 est avantageusement un démarreur renforcé comportant un moteur électrique ainsi qu'un pignon destiné à engrener avec une couronne de démarrage du moteur thermique. Par démarreur "renforcé", on entend un démarreur présentant des pièces constitutives (balais élargis, porte-balais, réducteur de vitesse, contacteur, lanceur, pignon d'engrènement) ayant une configuration permettant de supporter 300000 à 400000 cycles de fonctionnement. Un tel démarreur présente l'avantage d'être robuste et peu onéreux. En variante, l'organe de démarrage 20 est un alterno-démarreur.

Des capteurs 22 du système de freinage sont utilisés pour mesurer la pression dans le circuit de freinage modifiée par l'appui du conducteur sur la pédale 18. Des capteurs 23 des roues sont utilisés pour mesurer la vitesse du véhicule.

Un calculateur moteur 21 de la chaîne de traction 10 est apte à piloter les différents éléments 11, K0, 13, et 20 de la chaîne de traction. Le calculateur moteur 21 comporte une mémoire 211 programme stockant des instructions logicielles pour la mise en oeuvre du procédé selon l'invention de gestion des arrêts automatique du moteur thermique en fonction des mesures retournées par les capteurs 22, 23. A cette fin, le calculateur moteur 21 analyse en continu la vitesse du véhicule et le comportement du conducteur sur la pédale de frein 18 pour adapter la stratégie d'arrêt automatique du moteur thermique 11 à appliquer.

Plus précisément, comme on peut le voir sur la figure 2, suite à une détection d'une phase de freinage, notamment par la détection d'un appui sur la pédale de frein 18 modifiant une pression dans le circuit de freinage, le calculateur 21 entre dans une phase initiale d'attente 100 dans laquelle la vitesse V_veh du véhicule automobile est comparée avec un seuil de vitesse haut S_h et un seuil de vitesse bas S_b. Le seuil de vitesse haut S_h et le seuil de vitesse bas S_b sont calibrables. Le seuil de vitesse bas S_b est compris par exemple entre 0 et 1 km/h. Le seuil de vitesse haut S_h est compris par exemple entre 10 et 20km/h et vaut de préférence de l'ordre de 12km/h.

Dans le cas où la vitesse du véhicule automobile V_veh est supérieure ou égale au seuil de vitesse haut S_h, le calculateur moteur 21 entre dans une phase 101 de surveillance d'une activité sur la pédale de frein 18 et si cette activité est stable sur une période de temps prédéfinie correspondant à une durée seuil D_s, le calculateur moteur 21 autorise un arrêt automatique du moteur thermique 11.

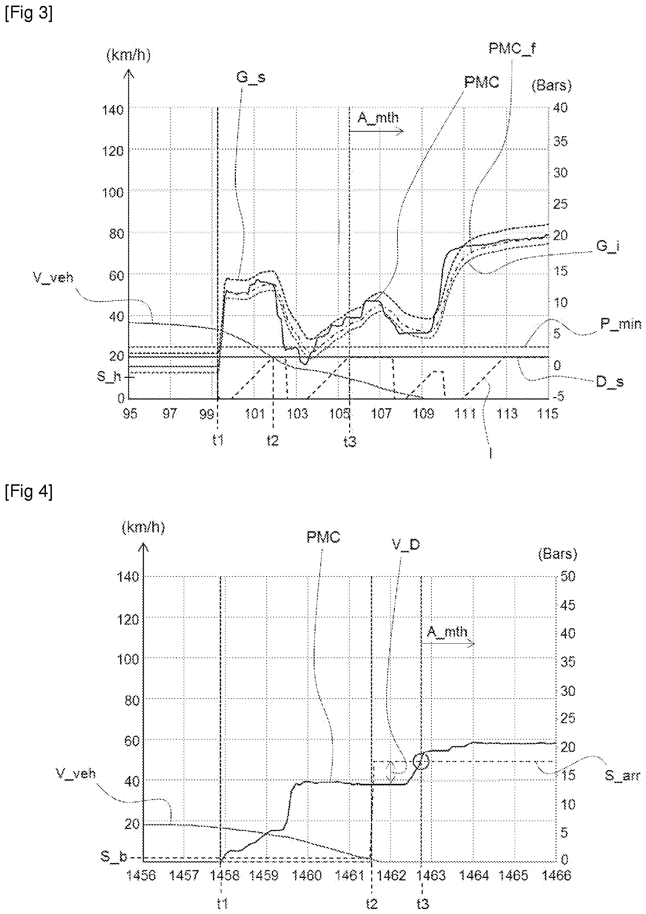

Ainsi, comme cela est illustré par la figure 3, à l'instant t1, la vitesse du véhicule V_veh est supérieure au seuil de vitesse haut S_h et un appui sur la pédale de frein 18 est détecté. En effet, la pression PMC dans le maître-cylindre du circuit de freinage commence à varier en raison d'un appui sur la pédale de frein 18.

L'activité sur la pédale de frein 18 est considérée comme stable si le signal de la pression PMC dans le circuit de freinage est compris entre un gabarit inférieur G_i et un gabarit supérieur G_s pendant la durée seuil D_s. Le gabarit inférieur G_i et le gabarit supérieur G_s sont élaborés à partir d'un signal filtré PMC_f de la pression dans le circuit de freinage auquel est respectivement soustrait et ajouté une valeur de décalage. Le filtrage appliqué au signal réel PMC pourra être notamment un filtrage de type passe-bas, avantageusement d'ordre 1. Toutefois, un filtrage d'un autre type et/ou d'un autre ordre pourra être appliqué en fonction du besoin.

A l'instant t3, le signal PMC ayant été compris entre le gabarit inférieur G_i et le gabarit supérieur G_s pendant la durée seuil D_s par exemple de 2 secondes, l'arrêt automatique du moteur thermique A_mth est autorisé sur une plage de vitesse non nulle. Cette plage de vitesse pourra dépendre du choix de l'organe de démarrage 20.

On observe ainsi que l'intégrateur I associé au temps pendant lequel le signal PMC est compris entre les gabarits G_i et G_s atteint la durée seuil D_s (valant 2 secondes dans cet exemple) à l'instant t3.

On prévoit également que le niveau de pression PMC dans le circuit de freinage doit être supérieur à un seuil minimal de pression P_min, valant par exemple 3 bars, au moment de l'autorisation de l'arrêt automatique A_mth du moteur thermique 11.

Par ailleurs, on pourra également considérer qu'un gradient de pression dans le circuit de freinage doit être inférieur à un premier seuil et supérieur à un deuxième seuil pour estimer que l'activité sur la pédale de frein 18 est stable. Ainsi, on observe qu'à l'instant t2, l'arrêt automatique du moteur thermique 11 n'est pas autorisé malgré le fait que l'intégrateur I atteigne la durée seuil D_s, car le conducteur relâche la pédale de frein 18, ce qui induit un gradient de pression important supérieur au seuil. En revanche, à l'instant t3, aucun gradient de pression important n'est observé, de sorte que le calculateur moteur 21 autorise l'arrêt automatique A_mth du moteur thermique 11.

Dans le cas où la vitesse V_veh du véhicule automobile est inférieure ou égale au seuil de vitesse bas S_b, le calculateur moteur 21 entre dans une phase de surveillance d'une surpression sur la pédale de frein 18 et si une surpression sur la pédale 18 est détectée, le calculateur moteur 21 autorise un arrêt automatique A_mth du moteur thermique 11.

La surpression sur la pédale de frein 18 est détectée lorsque la pression PMC dans le circuit de freinage devient supérieure à un seuil S_arr. Le seuil S_arr est égal à la valeur de la pression PMC dans le circuit de freinage au moment où la vitesse du véhicule V_veh devient inférieure ou égale au seuil de vitesse bas S_b augmentée d'une valeur de décalage V_D comprise par exemple entre 2 et 4 bars.

Comme cela est illustré par la figure 4, à l'instant t1, on détecte une phase de freinage. A l'instant t2, la vitesse du véhicule devient inférieure au seuil de vitesse bas S_b, ce qui a pour effet de déclencher le calcul du seuil S_arr via l'ajout de la valeur V_D. A l'instant t3, le conducteur augmente son appui sur la pédale de frein 18, de sorte que le signal de pression PCM atteint le seuil S_arr et le calculateur moteur 21 autorise l'arrêt automatique A_mth du moteur thermique 11.

Au cours de la phase de freinage, le calculateur moteur 21 assure une surveillance de la pression PMC dans le circuit de freinage et dans le cas d'une détection d'un freinage sportif et/ou d'une situation de freinage d'urgence, alors l'arrêt automatique du moteur thermique 11 est inhibé dans une étape 103. Le freinage sportif et/ou la situation de freinage d'urgence est détectée lorsqu'une pression PMC dans le circuit de freinage dépasse un seuil de pression maximal P_max pendant une durée seuil DSU_s valant par exemple 1s. Ce seuil de pression maximal P_max dépend de la vitesse V_veh du véhicule. Plus la vitesse V_veh du véhicule augmente, plus ce seuil P_max augmente.

Dans le cas où l'on se trouve dans la phase 101 de surveillance d'une activité sur la pédale de frein 18 et que la vitesse V_veh du véhicule automobile devient inférieure ou égale au seuil de vitesse bas S_b sans qu'aucune activité stable sur la pédale de frein 18 n'ait été détectée, alors le calculateur moteur 21 passe dans la phase 102 de surveillance d'une surpression sur la pédale de frein 18.

Dans le cas où l'on se trouve dans la phase 102 de surveillance d'une surpression sur la pédale de frein 18 et que la vitesse V_veh du véhicule automobile devient supérieure au seuil de vitesse bas S_b sans qu'aucune surpression sur la pédale de frein 18 n'ait été détectée, alors le calculateur moteur 21 repasse dans la phase 100 initiale d'attente.

## Revendications

1. Procédé de gestion d'un arrêt automatique de moteur thermique (11) appartenant à une chaîne de traction (10) de véhicule automobile comportant en outre une boîte de vitesses automatique (13) et un système (20) de démarrage et d'arrêt automatique du moteur thermique (11), dans lequel :
- suite à une détection d'une phase de freinage, notamment par la détection d'un appui sur une pédale de frein (18) modifiant une pression (PMC) dans un circuit de freinage, ledit procédé comporte une phase (100) initiale d'attente dans laquelle une vitesse (V_veh) du véhicule automobile est comparée avec un seuil de vitesse haut (S_h) et un seuil de vitesse bas (S_b) distincts, et
- dans le cas où la vitesse (V_veh) du véhicule automobile est supérieure ou égale au seuil de vitesse haut (S_h), ledit procédé entre dans une phase (101) de surveillance d'une activité sur la pédale de frein (18) et si cette activité est stable sur une durée seuil (D_s), ladite activité étant considérée comme stable si un signal de la pression (PMC) dans le circuit de freinage est compris entre un gabarit inférieur (G_i) et un gabarit supérieur (G_s) pendant la durée seuil (D_s), un arrêt automatique du moteur thermique (11) est autorisé, ou
- dans le cas où la vitesse (V_veh) du véhicule automobile est inférieure ou égale au seuil de vitesse bas (S_b), ledit procédé entre dans une phase (102) de surveillance d'une surpression sur la pédale de frein (18) et si une surpression sur la pédale est détectée, ladite surpression étant détectée lorsque la pression (PMC) dans le circuit de freinage devient supérieure à un seuil (S_arr), ledit seuil (S_arr) étant égal à une valeur de la pression (PMC) dans le circuit de freinage au moment où la vitesse (V_veh) du véhicule automobile devient inférieure ou égale au seuil de vitesse bas (S_b) augmentée d'une valeur de décalage, un arrêt automatique du moteur thermique (11) est autorisé,
- dans le cas où l'on se trouve dans la phase (101) de surveillance d'une activité sur la pédale de frein (18) et que la vitesse du véhicule automobile (V_veh) devient inférieure ou égale au seuil de vitesse bas (S_b) sans qu'aucune activité stable sur la pédale de frein (18) n'ait été détectée, alors le procédé comporte l'étape de passer dans la phase (102) de surveillance d'une surpression sur la pédale de frein (18).

2. Procédé selon la revendication 1, **caractérisé en ce que** le gabarit inférieur (G_i) et le gabarit supérieur (G_s) sont élaborés à partir d'un signal filtré (PMC_f) de la pression dans le circuit de freinage auquel est respectivement soustrait et ajouté une valeur de décalage.

3. Procédé selon l'une quelconque des revendications 1 à 2, **caractérisé en ce que** l'activité sur la pédale de frein (18) est considérée comme stable si également un gradient de pression dans le circuit de freinage est inférieur à un premier seuil et supérieur à un deuxième seuil.

4. Procédé selon l'une quelconque des revendications 1 à 3, **caractérisé en ce qu'**au cours de la phase de freinage, ledit procédé comporte une étape de surveillance d'une pression (PMC) dans le circuit de freinage et dans le cas d'une détection d'un freinage sportif et/ou d'une situation de freinage d'urgence lorsqu'une pression (PMC) dans le circuit de freinage dépasse un seuil de pression maximal (P_max) en fonction de la vitesse du véhicule pendant une durée seuil (DSU_s), alors l'arrêt automatique du moteur thermique (11) est inhibé.

5. Procédé selon l'une quelconque des revendications 1 à 4, **caractérisé en ce que** dans le cas où l'on se trouve dans la phase (102) de surveillance d'une surpression sur la pédale de frein (18) et que la vitesse (V_veh) du véhicule automobile devient supérieure au seuil de vitesse bas (S_b) sans qu'aucune surpression sur la pédale de frein (18) n'ait été détectée, alors le procédé comporte l'étape de repasser dans la phase (100) initiale d'attente.

6. Calculateur moteur (21) **caractérisé en ce qu'**il comporte une mémoire (211) programme stockant des instructions logicielles pour la mise en oeuvre du procédé de gestion d'un arrêt automatique du moteur thermique (11) tel que défini selon l'une quelconque des revendications précédentes.

## Patentansprüche

1. Verfahren zum Verwalten einer automatischen Abschaltung eines Wärmemotors (11), der zu einer Antriebskette (10) eines Kraftfahrzeugs gehört, weiterhin umfassend ein Automatikgetriebe (13) und ein automatisches Start- und Stoppsystem (20) des Wärmemotors (11). , in welchem:
- nach der Erkennung einer Bremsphase, insbesondere durch Erkennung einer Betätigung eines Bremspedals (18), die einen Druck (PMC) in einem Bremskreis verändert, umfasst das Verfahren eine Anfangsphase (100) d des Wartens, in der eine Geschwindigkeit (V_Fahrzeug) erreicht wird ) des Kraftfahrzeugs mit einer ausgeprägten hohen Geschwindigkeitsschwelle (S_h) und einer niedrigen Geschwindigkeitsschwelle (S_b) verglichen wird, und
- für den Fall, dass die Geschwindigkeit (V_veh) des Kraftfahrzeugs größer oder gleich der Hochgeschwindigkeitsschwelle (S_h) ist, eintritt das Verfahren in eine Phase (101) der Überwachung einer Betätigung des Bremspedals (18) und wenn diese vorliegt die Aktivität über eine Schwellendauer (D_s) stabil ist, wobei die Aktivität als stabil gilt, wenn ein Drucksignal (PMC) im Bremskreis während der Schwellendauer (D_s) zwischen einem unteren Pegel (G_i) und einem höheren Pegel (G_s) liegt, die automatische Abschaltung der Wärmekraftmaschine (11) ist zulässig, oder
- für den Fall, dass die Geschwindigkeit (V _fz ) des Kraftfahrzeugs gilt kleiner oder gleich dem Schwellenwert für niedrige Geschwindigkeit (S _ b) ist, geht das Verfahren in eine Phase (102) der Überwachung eines Überdrucks auf dem Bremspedal (18) über, und wenn ein Überdruck auf dem Pedal erkannt wird, wird der Überdruck erkannt, wenn der Der Druck (PMC) im Bremskreis wird höher an einer Schwelle ( S_arr ) wobei der Schwellenwert (S _ arr) einem Druckwert entspricht (PMC) im Bremskreis Bei Zeitpunkt, an dem die Geschwindigkeit (V _fz ) des Kraftfahrzeuges abnimmt wird untere Oder gleich dem niedrigen Geschwindigkeitsschwellenwert (S_b) erhöht eines Offsetwertes , a automatische Abschaltung der Wärmekraftmaschine (11) zugelassen ist
- in dem Fall, in dem wir uns in der Phase (101) der Überwachung einer Aktivität auf dem Bremspedal (18) befinden und die Geschwindigkeit des Kraftfahrzeugs (V_veh) kleiner oder gleich dem Schwellenwert für niedrige Geschwindigkeit (S_b) wird, ohne dass es zu einer Stabilisierung kommt Wenn eine Aktivität am Bremspedal (18) erkannt wurde, umfasst das Verfahren den Schritt des Übergangs in die Phase (102) der Überwachung eines Überdrucks am Bremspedal (18).

2. Verfahren nach Anspruch 1, **dadurch gekennzeichnet, dass** das untere Muster (G_i) und das obere Muster (G_s) aus einem gefilterten Signal (PMC_f) des Drucks im Bremskreis erstellt werden, von dem jeweils ein Offsetwert subtrahiert und addiert wird.

3. Verfahren nach einem der Ansprüche 1 bis 2, **dadurch gekennzeichnet, dass** die Betätigung des Bremspedals (18) als stabil gilt, wenn auch ein Druckgradient im Bremskreis kleiner als ein erster Schwellenwert und größer bei einem zweiten Schwellenwert ist.

4. Verfahren nach einem der Ansprüche 1 bis 3, **dadurch gekennzeichnet, dass** das Verfahren während der Bremsphase einen Schritt der Überwachung eines Drucks (PMC) im Bremskreis und im Falle der Erkennung einer Sportbremsung und/oder einer Notbremsung umfasst Situation, in der ein Druck (PMC) im Bremskreis einen maximalen Druckschwellenwert (P_max) in Abhängigkeit von der Geschwindigkeit des Fahrzeugs für eine Dauerschwelle (DSU_s) überschreitet, dann wird die automatische Abschaltung der Wärmekraftmaschine (11) verhindert.

5. Verfahren nach einem der Ansprüche 1 bis 4, **dadurch gekennzeichnet, dass** im Fall der Phase (102) von Überwachen eines Überdrucks auf das Bremspedal (18) und darauf, dass die Geschwindigkeit (V_veh) des Kraftfahrzeugs größer als die niedrige Geschwindigkeitsschwelle (S_b) wird, ohne dass ein Überdruck auf das Bremspedal (18) erkannt wurde, dann umfasst das Verfahren die Schritt der Rückkehr zur anfänglichen Wartephase (100).

6. Motorcomputer (21), **dadurch gekennzeichnet, dass** er einen Programmspeicher (211) umfasst, der Softwareanweisungen zur Implementierung des Verfahrens zur Verwaltung einer automatischen Abschaltung des Wärmemotors (11) gemäß einem der vorhergehenden Ansprüche speichert.

## Claims

1. Method for managing an automatic shutdown of a thermal engine (11) belonging to a traction chain (10) of a motor vehicle further comprising an automatic gearbox (13) and an automatic start and stop system (20) of the heat engine (11), in which:
- following detection of a braking phase, in particular by detection of pressing on a brake pedal (18) modifying a pressure (PMC) in a braking circuit, said method comprises an initial phase (100) d the wait in which a speed (V_veh) of the motor vehicle is compared with a distinct high speed threshold (S_h) and a low speed threshold (S_b), and
- in the case where the speed (V_veh) of the motor vehicle is greater than or equal to the high speed threshold (S_h), said method enters a phase (101) of monitoring an activity on the brake pedal (18) and if this activity is stable over a threshold duration (D_s), said activity being considered stable if a pressure signal (PMC) in the braking circuit is between a lower gauge (G_i) and a higher gauge (G_s) during the threshold duration (D_s), automatic shutdown of the thermal engine (11) is authorized, or
- in the case where the speed (V _ veh) of the motor vehicle is less than or equal to the low speed threshold (S _ b) said method enters a phase (102) of monitoring an overpressure on the brake pedal (18) and if an overpressure on the pedal is detected, said overpressure being detected when the pressure (PMC) in the braking circuit becomes higher at a threshold ( S_arr ) said threshold (S _ arr) being equal to a value of the pressure (PMC) in the braking circuit At moment when the speed (V _ veh) of the motor vehicle becomes lower Or equal to the low speed threshold (S_b) increased of an offset value , a automatic shutdown of the thermal engine (11) is authorized
- in the case where we are in the phase (101) of monitoring an activity on the brake pedal (18) and the speed of the motor vehicle (V_veh) becomes less than or equal to the low speed threshold ( S_b) without any stable activity on the brake pedal (18) having been detected, then the method comprises the step of passing into the phase (102) of monitoring an overpressure on the brake pedal (18).

2. Method according to claim 1, **characterized in that** the lower template (G_i) and the upper template (G_s) are produced from a filtered signal (PMC_f) of the pressure in the braking circuit to which is respectively subtracted and added a offset value.

3. Method according to any one of claims 1 to 2, **characterized in that** the activity on the brake pedal (18) is considered stable if also a pressure gradient in the braking circuit is less than a first threshold and greater at a second threshold.

4. Method according to any one of claims 1 to 3, **characterized in that** during the braking phase, said method comprises a step of monitoring a pressure (PMC) in the braking circuit and in the case of detection of sports braking and/or an emergency braking situation when a pressure (PMC) in the braking circuit exceeds a maximum pressure threshold (P_max) as a function of the speed of the vehicle for a duration threshold (DSU_s), then the automatic shutdown of the heat engine (11) is inhibited.

5. Method according to any one of claims 1 to 4, **characterized in that** in the case where we are in phase (102) of monitoring of overpressure on the brake pedal (18) and that the speed (V_veh) of the motor vehicle becomes greater than the low speed threshold (S_b) without any overpressure on the brake pedal (18) having been detected, then the method includes the step of returning to the initial waiting phase (100).

6. Engine computer (21) **characterized in that** it comprises a program memory (211) storing software instructions for implementing the method for managing an automatic shutdown of the thermal engine (11) as defined according to any one of the preceding claims.
